# EUROPEAN PATENT SPECIFICATION

(11) **EP 4 251 471 B1**
(45) Date of publication and mention of the grant of the patent: **25.06.2025**
(21) Application number: 21814915.1
(22) Date of filing: 22.11.2021
(51) Int. Cl.: B60P 1/00, B60P 3/00, H02S 20/00, B60P 3/40, F24S 25/12

(54) **METHOD FOR OUTDOOR INSTALLATION OF AN ARRAY OF SOLAR CONVERTERS, AND CARRIAGE USED IN THE METHOD**
VERFAHREN ZUR AUSSENINSTALLATION EINER ANORDNUNG VON SOLARWANDLERN UND IN DEM VERFAHREN VERWENDETER WAGEN
PROCÉDÉ D'INSTALLATION EN EXTÉRIEUR D'UNE MATRICE DE CONVERTISSEURS SOLAIRES, ET VÉHICULE UTILISÉ DANS LE PROCÉDÉ

(30) Priority: 24.11.2020 IT 202000028190
(43) Date of publication of application: 04.10.2023
(73) Proprietor: Comau S.p.A., 10095 Grugliasco (Torino) (IT)
(72) Inventor: DI STEFANO, Giovanni, 10095 Grugliasco (Torino) (IT); BECCARISI, Francesco, 10095 Grugliasco (Torino) (IT); POLLANO, Maurizio, 10095 Grugliasco (Torino) (IT)
(74) Representative: Buzzi, Notaro & Antonielli d'Oulx S.p.A.
(86) International application number: PCT/IB2021/060809
(87) International publication number: WO 2022/112921

(56) References cited:
- WO-A1-2014/108196
- WO-A1-2019/097348
- DE-A1- 102010 038 054

## Description

### Field of the invention

The present invention relates to methods for outdoor installation of an array of solar converters, for example photovoltaic solar panels or solar mirrors.

### Prior art

In the document WO 2019/097348 A1 the present applicant has already proposed a method and a system for outdoor installation of arrays of photovoltaic solar panels, in which a framework for supporting the photovoltaic solar panels is preliminarily installed in the open field, after which the photovoltaic solar panels are mounted on the supporting framework by a robot provided on board a vehicle that moves over the installation field, the robot positioning the photovoltaic solar panels on successive portions of the aforesaid supporting framework. The main advantage of this solution lies in the possibility of carrying out the operation of installation of the photovoltaic solar panels in a completely automatic way. The vehicle that carries the robot may, for example, be an automated guided vehicle (AGV) or a remotely controlled vehicle. Associated to the robot is a viewing system that is used by the control system of the robot for positioning the photovoltaic solar panels properly, notwithstanding the variability of the position of the vehicle with respect to the supporting framework, due to the irregularities of the terrain.

Of course, the aforesaid known solution involves a relative complexity of the system and may not prove suitable where it is desired to reduce as much as possible the cost of the installation system.

In order to overcome the above drawbacks, the present applicant has already proposed in its Italian patent application IT 10 2020 000010507 (still secret at the priority date of the present invention), a method for assembly and installation in the open field of arrays of solar converters, for example photovoltaic panels or even solar mirrors, the method comprising:
a) a first step of assembly of an array of solar converters, which is carried out with the aid of at least one robot in a mobile workstation located temporarily in a position adjacent to the installation field, as "temporary factory";
b) a second step of transportation of the array of solar converters assembled in the first step, where the assembled array of solar converters is transported from the aforesaid workstation to the place of installation with the aid of a carriage; and
c) a third step of installation of the array of solar converters, where the array of solar converters is mounted on a row of supporting posts preliminarily arranged in the installation field.

The aforesaid first assembly step comprises assembly of a supporting frame of the solar converters and installation of the solar converters on the supporting frame.

The present invention stems from the prior proposal and regards the configuration and method of use of the carriage dedicated to transport and installation of the array of solar converters.

The document WO 2014/108196 A1 describes a technique of installation in the open field of arrays of photovoltaic solar panels, in which a vehicle is used, specifically a semi-trailer truck, which is able to transport a container containing one or more arrays of photovoltaic solar panels. The truck is equipped with a front crane and a rear crane, which are used to grip a container that is initially on the ground and load it onto the platform of the truck or to keep it raised in the air. The truck is moreover provided with a lifting arm, which is able to grip an array of photovoltaic solar panels contained in the container, lift it up so as to take it out of the container, and lay it on a supporting structure prearranged in the field. As is evident, this solution is very complex and costly and is not even particularly efficient. In the first place, a semi-trailer truck, even just on account of its dimensions, is far from being suited to reaching conveniently the installation sites, which are frequently located on a rough terrain. Moreover, the encumbrance of the container does not allow the truck to position itself close to the supporting structure that is to receive the array of photovoltaic solar panels. To overcome this drawback, during the installation operation, the cranes with which the truck is provided keep the container in a high raised position, above the truck, but this of course entails a major expenditure of energy and considerable problems for the safety of operators.

### Object of the invention

The object of the present invention is to improve further the prior proposal of the present applicant with reference in particular to the final step of picking-up, transportation, and installation of the array of solar converters in the installation field.

In particular, a further object of the invention is to render the operation of final installation simpler, faster, and also more reliable as regards ensuring proper positioning of the array of solar converters in the field.

Yet a further object of the invention is to reduce drastically the cost of the installation operation.

### Summary of the invention

With a view to achieving the aforesaid objects, the subject of the invention is a method for outdoor installation of an array of solar converters (for example, photovoltaic solar panels or solar mirrors) having the characteristics specified in claim 1 and a carriage for transport and outdoor installation of an array of solar converters according to claim 11.

In the preferred embodiment, includes a first lifter and a second lifter arranged on the carriage in positions spaced apart from one another in a longitudinal direction of the carriage, and said electronic control unit is programmed in such a way as to be able to control the two lifters, if necessary in a differentiated way, in order to tilt the array of solar converters longitudinally (i.e., in the longitudinal direction of the carriage) forwards or backwards, according to a possible corresponding incline in the terrain.

The first and second lifters are set between a base structure secured to the load-bearing structure of the carriage and said main upper structure that is to sustain the weight of the array of solar converters. In one embodiment, associated to the aforesaid upper structure is an auxiliary supporting structure, which is to support the array of solar converters and is mounted so that it can oscillate about a longitudinal central axis on the main upper structure. An actuator is provided that controls rotation of the auxiliary supporting structure about said longitudinal central axis in such a way as to control a lateral inclination of the array of solar converters according to the profile of the terrain in the installation area.

Thanks to the aforementioned characteristics, in the above example of embodiment, the general plane of the array of solar converters can hence perform both an oscillation of pitch, tilting forwards or backwards, and an oscillation of roll, tilting to one side or the other. In this way, during the laying operation, the array of solar converters can assume an orientation that makes it possible to take into account the incline in the terrain both in the longitudinal direction of the row of supporting posts and in the direction transverse to the longitudinal direction.

Once again in the case of the preferred embodiment, the aforesaid upper structure includes a first upper-structure portion connected to the lifting device and a second upper-structure portion that is to carry, directly or indirectly, the array of solar converters and can be translated longitudinally to impart on the array of solar converters a limited longitudinal movement. This movement is used, in the final installation stage, for coupling the longitudinal beam of the supporting frame of the array of solar converters carried by the carriage to the longitudinal beam of the frame of an array of solar converters previously laid on the supporting posts in the installation field.

According to a further characteristic, the upper structure carried by the lifting device in turn carries, either directly or indirectly, a plurality of clamping devices, set longitudinally at a distance apart from one another to receive and block the longitudinal beam of the supporting frame of the array of solar converters.

In a preferred example, each clamping device comprises a receptacle, received in which is the longitudinal beam of the frame of the array of solar converters, and a pair of blocking elements that can be displaced between an open release position and a closed blocking position. Preferably, the two blocking elements have an intermediate position of loose blocking, where the beam received in the receptacle is prevented from coming out of the receptacle but has in any case a certain play within the latter. The clamping devices are prearranged in the aforesaid condition of loose blocking in the final installation stage, to allow the frame of the array of solar converters the freedom to perform minor movements of adjustment.

According to a further characteristic, during transport on the carriage, a last row of solar converters, which projects in cantilever fashion beyond the longitudinal beam of the supporting frame, is temporarily supported by means of an accessory tool that is associated to the longitudinal beam of the frame.

The carriage may be built in any known way. However, in a preferred solution, the above load-bearing structure is mounted on wheels orientable about vertical axes in such a way as to enable the carriage both to move forward or backward in a direction parallel to the longitudinal direction of the carriage and to veer with respect to the aforesaid longitudinal direction and to translate in a direction orthogonal to the aforesaid longitudinal direction. In this way, the carriage can move along a row of supporting posts in the installation field and then translate in a transverse direction in order to position itself in the space comprised between two successive posts on which the array of solar converters carried by the carriage is to be laid.

In the aforesaid example, the carriage may be configured according to the technology of so-called AGVs (Automated Guided Vehicles) or AMRs (Automated Mobile Robots), with electric motors that control orientation of the wheels and electric motors for traction on the wheels. It may moreover envisage an electric battery for supply of the electric motors and of the electric actuators of the lifting device.

### Detailed description of the invention

Further characteristics and advantages of the invention will emerge from the ensuing description with reference to the annexed drawings, which are provided purely by way of non-limiting example and in which:
- Figure 1 is a perspective view that shows an array of solar converters, specifically photovoltaic solar panels, during transport to the installation field, by means of the carriage according to the invention;
- Figures 2 and 3 are a view in side elevation and a view in front elevation of the assembly of Figure 1;
- Figures 4 and 5 are top plan views of the installation field that show the movement of the carriage in the final step of the installation operation;
- Figure 6 is a schematic side view of the lifting device in the raised condition;
- Figure 7 is a schematic side view of the lifting device in the lowered condition;
- Figure 8 is a further perspective view of the lifting device;
- Figure 9 is a front view of the lifting device, which shows the possibility of oscillation about a longitudinal central axis of an auxiliary supporting structure mounted on the lifting device;
- Figure 10 is a perspective view that illustrates the carriage by itself, with the lifting device in the lowered condition;

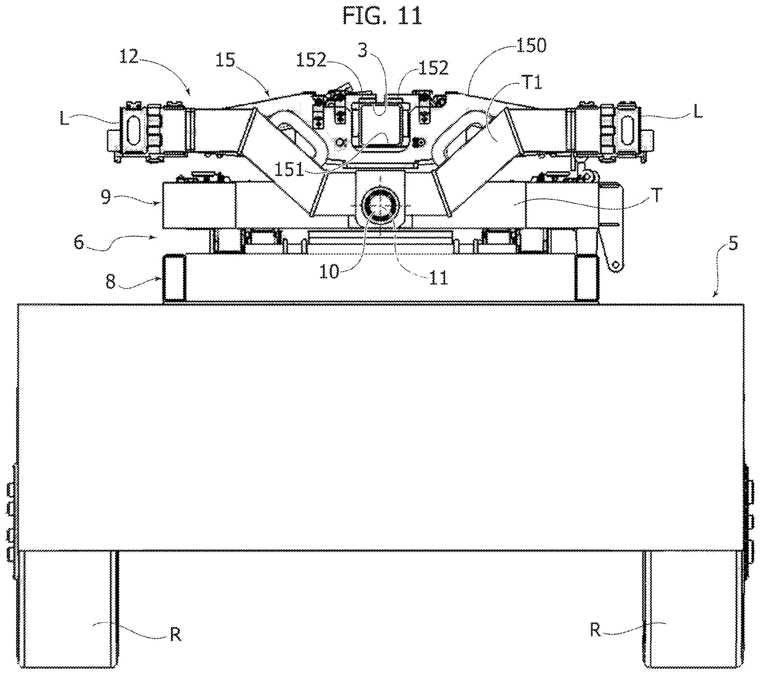

- Figure 11 is a front view of the carriage of Figure 10, with the lifting device in the lowered condition;

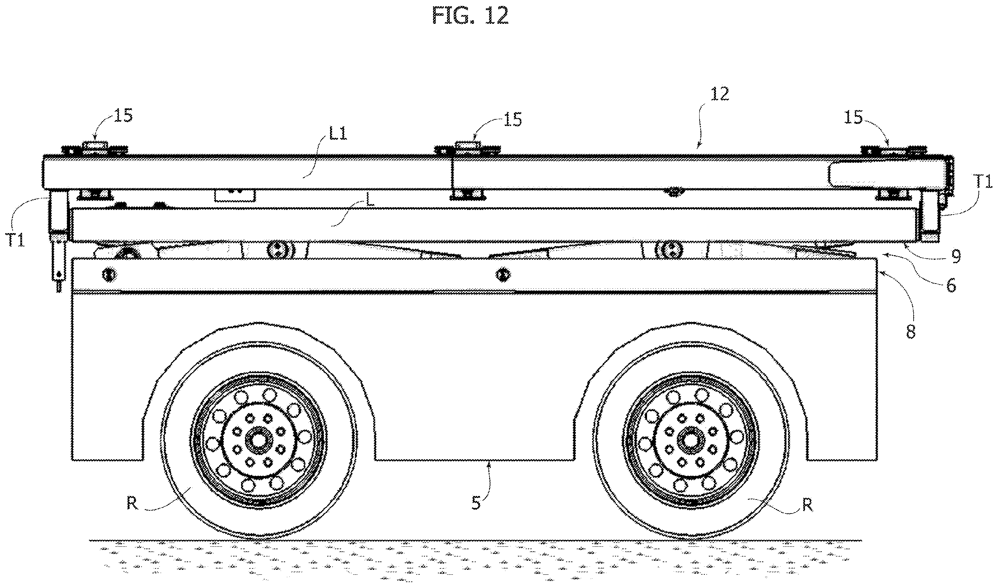

- Figure 12 is a side view of the carriage of Figure 10, with the lifting device in the lowered condition;
- Figures 13 to 15 are a front view, a perspective view, and a detail of one of the clamping devices carried by the lifting device; and
- Figures 16 and 17 are a front view and perspective view, respectively, of an accessory tool that is associated to the longitudinal beam of the supporting frame.

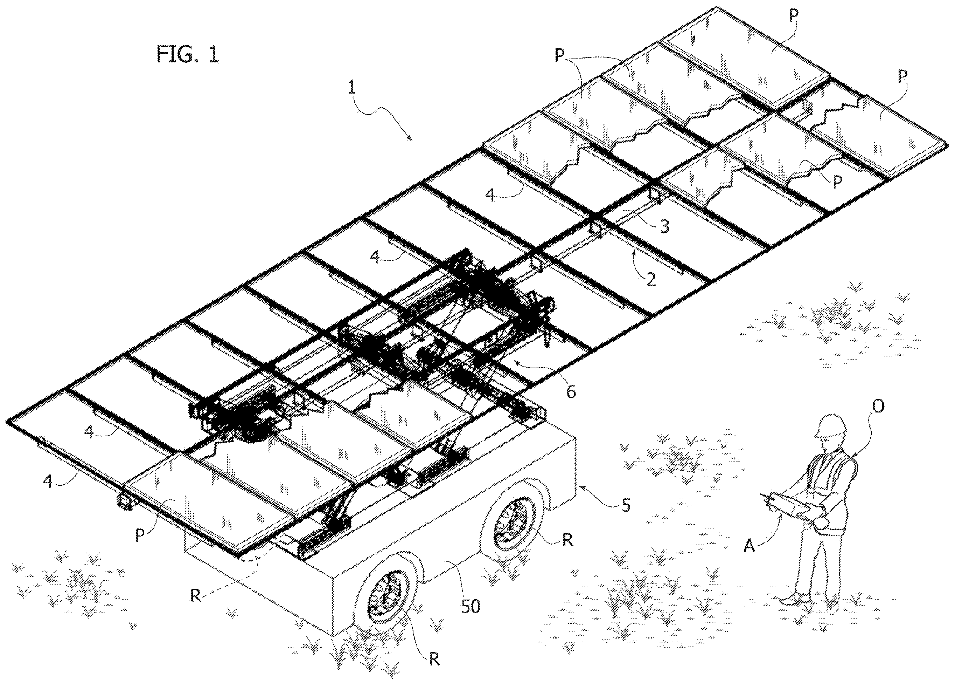

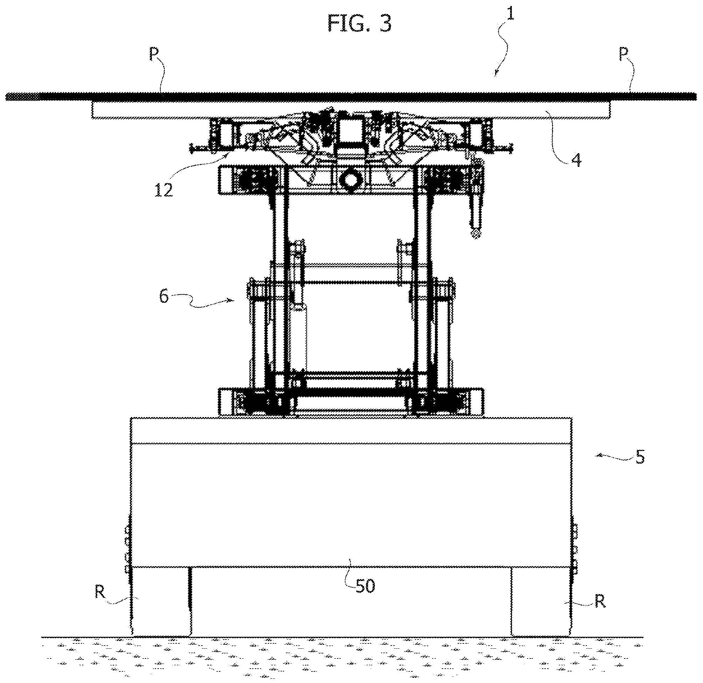

In Figures 1 to 3, the reference number 1 designates as a whole an array of solar converters, in the specific example photovoltaic solar panels P. The invention may be applied also to arrays of solar converters of a different type, for example arrays of solar mirrors.

In the example illustrated, the array 1 of photovoltaic solar panels P has a general planar configuration, with a supporting frame 2 on which the panels P are fixed. In the example, the frame 2 comprises a longitudinal beam 3 and a plurality of cross members 4. Once again in the case of the example illustrated, the array 1 comprises two rows set alongside one another of panels P. Each panel is fixed to the longitudinal beam 3 and to two cross members 4. Once again in the case of the example illustrated, only the two panels P at the right-hand end of the array (as viewed in Figure 1) each have a first side fixed to the beam 3, a second side fixed to a cross member 4, and a third side, opposite to the second side, projecting in cantilever fashion from the cross member 3.

The frame 2 and the panels P are assembled together to form the array 1 in an assembly station (not illustrated) close to the installation field (preferably with the method illustrated in the prior patent application IT 10 2020 000010507 filed by the present applicant).

Once assembled, the array 1 of panels P is transported as far as the installation site by means of a carriage 5, which supports the frame 2 for supporting the array 1 by means of a lifting device 6, via which the array 1 of panels P can be displaced vertically. As may be seen in Figure 1, the lifting device 6 maintains the general plane of the array 1 with a substantially horizontal orientation, but is also able, as will be described in what follows, to tilt the array 1 forwards or backwards in the longitudinal direction of the carriage 5, and also laterally on one side or on the other in such a way as to lay the array 1 in the installation field with the orientation most suited in relation to the local incline of the terrain.

The carriage 5 may be built according to any known technique, for example according to the technology commonly used for vehicles of the AGV or AMR type.

In one example, the carriage 5 has a load-bearing structure 50 mounted on wheels R that are all orientable about vertical axes in such a way that the carriage can both translate in a direction parallel to its longitudinal direction, forwards or backwards, and veer with respect to the longitudinal direction, as well as translate in a transverse direction with respect to the aforesaid longitudinal direction, by means of rotation through 90° of the wheels about the respective vertical axes of orientation. The load-bearing structure 50 carries electric motors for orientation of the wheels about the respective vertical axes of oscillation and electric motors for traction on the wheels.

All the aforesaid details of construction are not illustrated herein in so far as they can be implemented in any known way. In the drawings, the wheels R are represented as conventional wheels merely for convenience of representation.

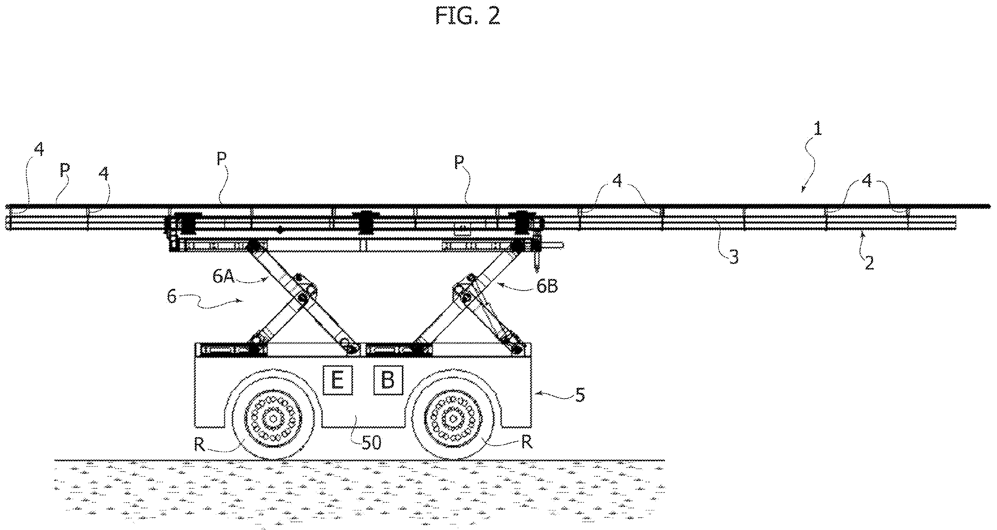

Moreover illustrated schematically in Figure 2 are an electronic control unit E and an electric power-supply battery B, which are prearranged on the load-bearing structure 50 of the carriage 5. The electronic control unit E is configured and programmed both for controlling the electric motors on board the carriage 5, in order to displace the carriage according to a pre-set path, and for controlling the electric actuators (described in what follows), which control the lifting device 6. The electronic control unit E on board the carriage 5 is in communication, preferably in wireless mode, with a driving device A (see Figure 1), which may, for example, be controlled by an operator O who is walking close to the carriage 5. Of course, this mode of use is here represented merely by way of example. The driving device A could also be controlled by an operator from a control tower, or, once again by way of example, the carriage 5 could be displaced in the installation field using a tractor.

With reference to Figure 2, the lifting device 6 includes a first lifter 6A and a second lifter 6B, which are set at a distance apart from one another in the longitudinal direction of the carriage 5. In the example, both of the lifters 6A and 6B are of the pantograph type. They will be illustrated in detail hereinafter.

The use of two lifters 6A and 6B set longitudinally at a distance apart from one another enables differentiated driving of the lifters 6A and 6B, which brings about an oscillation of pitch of the array 1 of panels P. In other words, the general plane of the array 1 can be longitudinally tilted forwards or backwards. This characteristic is useful for orienting the general plane of the array 1 in the most appropriate way, taking into account the configuration of the terrain on which the array 1 of panels P is to be positioned.

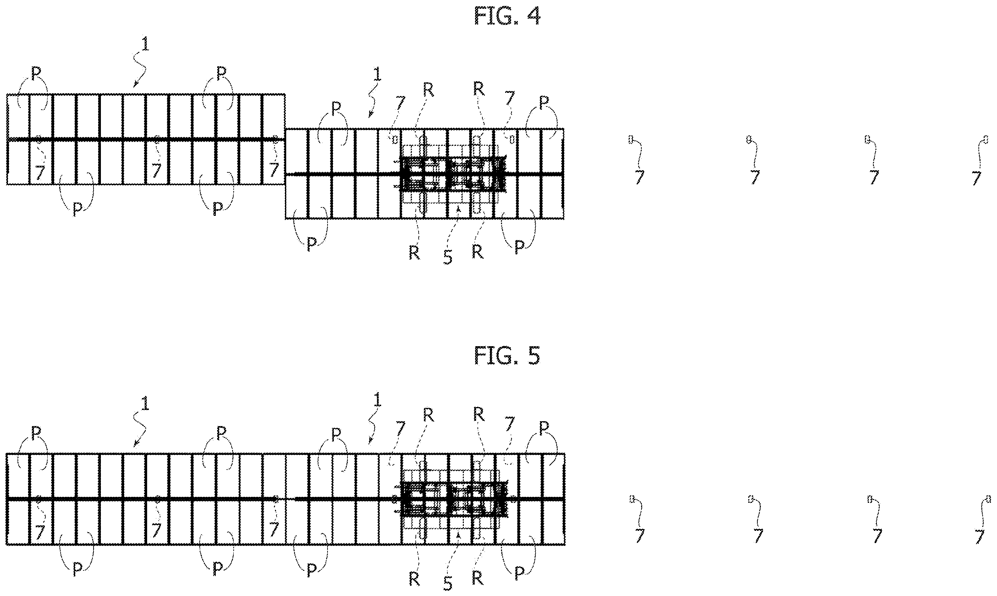

Figures 4 and 5 are top plan views that show the final steps of positioning of an array 1 of panels P in the installation field.

In the installation field, a number of rows of supporting posts 7 are prearranged, set longitudinally at a distance apart from one another. Figures 4 and 5 show a row of supporting posts 7 with an array 1' of panels P previously positioned, with their longitudinal supporting beam 3 connected to the supporting posts 7.

Figure 4 shows a step in which the carriage 5 is moving in a direction transverse with respect to its longitudinal direction, thanks to an orientation of its wheels R rotated through 90° with respect to the normal orientation for advance in a longitudinal direction. Figure 5 shows the final position reached by the carriage 5, where the carriage 5 enters the space comprised between two posts 7 adjacent to one another. The mutual distancing of the posts 7 in the installation field and the length of the carriage 5 in its longitudinal direction are chosen in such a way as to enable the carriage 5 to insert itself in the space between two successive posts 7.

During the movement of approach illustrated in Figures 4 and 5, the lifting device 6 of the carriage 5, including the lifters 6A and 6B, is kept in a raised position, as illustrated in Figure 2, to guarantee that the plane of the array 1 of panels P is located on the supporting posts 7.

Once the position illustrated in Figure 5 is reached, where the supporting beam 3 of the array 1 of panels P is aligned, in top plan view, with the row of supporting posts 7, the operator drives lowering of the lifters 6A and 6B until the supporting beam 3 of the array 1 is laid on the supporting posts 7 located underneath.

According to a technique in itself known, the supporting beam 3 of each array of panels is received within receptacles defined by coupling members carried by the top ends of the supporting posts 7. These coupling members have a first portion that receives the supporting beam 3 and that is connected in an articulated way to a second portion anchored to the top of the respective supporting post in such a way as to allow oscillation of the supporting beam 3 about an axis parallel to its longitudinal direction. Once again according to the known art, the movement of oscillation maybe controlled by actuator devices of any type for providing a device for tracking the apparent motion of the Sun during the day. In this way, each array 1 of panels P oscillates progressively about an axis parallel to its longitudinal supporting beam 3 when the system of solar converters is in use.

The aforesaid details regarding the solar-tracking device are not described herein given that, as already mentioned, they can be obtained in any known way and, taken in themselves, do not fall within the scope of the present invention.

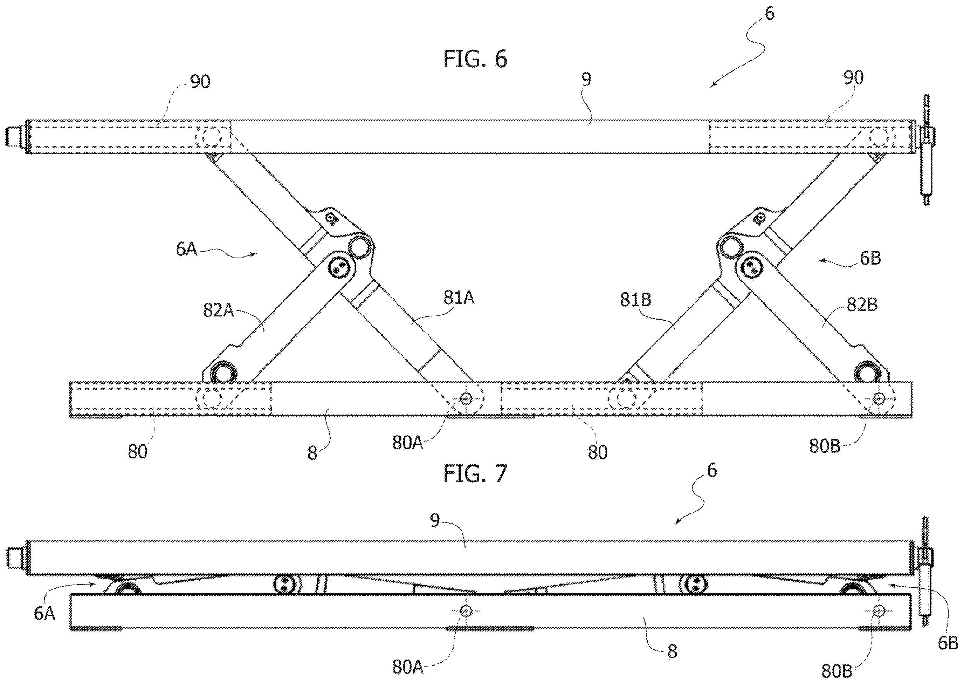

In the preferred embodiment illustrated herein, the lifters 6A and 6B constituting the lifting device 6 have the structure more clearly visible in Figures 6, 7, and 8.

With initial reference to Figure 6, the lifting device 6 comprises a base structure 8, which is secured to the load-bearing structure 50 of the carriage 5, and an upper structure 9 (schematically illustrated in Figures 6 and 7), which can be displaced vertically with respect to the base structure 8 by means of the lifters 6A and 6B.

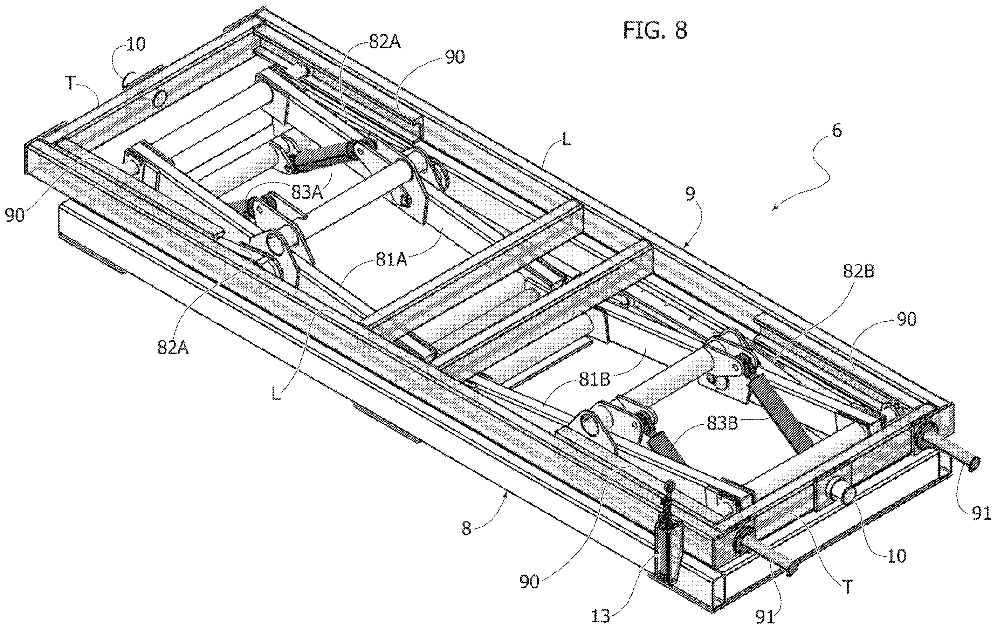

In the example illustrated, the lifters 6A and 6B both consist of two pantograph lifters. With reference in particular to Figure 8, the lifters 6A and 6B each have a pair of main arms 81A and 81B having their bottom ends connected in an articulated way to the lower structure 8 about fixed transverse axes 80A, 80B and top ends mounted so that they can slide in longitudinal guides 90 of the upper structure 9. The lifters 6A and 6B moreover each comprise two auxiliary arms, 82A and 82B respectively (see also Figure 8), having top ends connected in an articulated way to the arms 81A and 81B in their intermediate portions, and bottom ends mounted so that they can slide in longitudinal guides 80 of the base structure 8. Associated to the two lifters 6A and 6B are two pairs of electrically driven cylinder actuators 83A and 83B (see Figure 8) operatively set between the base structure 8 and the arms 81A and 81B.

Activation of the actuators 83A and 83B enables control of the position in height of the upper structure 9 with respect to the lower structure 8.

As already mentioned above, the electronic control unit is prearranged to enable differentiated driving of the actuators 83A and 83B, which enables a different positioning in height of the top ends of the arms 81A and 81B. Consequently, the upper structure 9 can be longitudinally inclined forwards or backwards (i.e., towards the left or towards the right as viewed in Figure 6) to impart on the array 1 of panels P carried by the lifting device 6 a corresponding inclination. In this way, it is possible to adapt the array of panels 1 to being laid on supporting posts that are set at different heights, on account of an incline of the terrain in the longitudinal direction of the row of supporting posts.

With reference once again to the embodiment shown in Figure 8, the upper structure 9 is in the form of a quadrangular frame, with two longitudinal beams L, the ends of which are connected together by cross members T. This structure is able to perform a limited longitudinal movement with respect to the guides 90 within which the top ends of the arms 81A and 81B of the two lifters 6A and 6B can slide. This limited longitudinal movement is controlled by two electrically driven cylinder actuators 91. Thanks to this characteristic, once the lifting device 6 has laid the array 1 of panels P on the supporting posts 7, and the supporting beam 3 of the array 1 have been inserted in the receptacles provided at the top of the posts, the actuators 91 can be driven to impart on the entire array 1 a slight longitudinal movement with respect to the carriage 5 on which it is carried, which is necessary for coupling one end of the longitudinal supporting beam 3 with a corresponding end of the supporting beam of the adjacent array 1 of panels P that has been previously laid in the installation field.

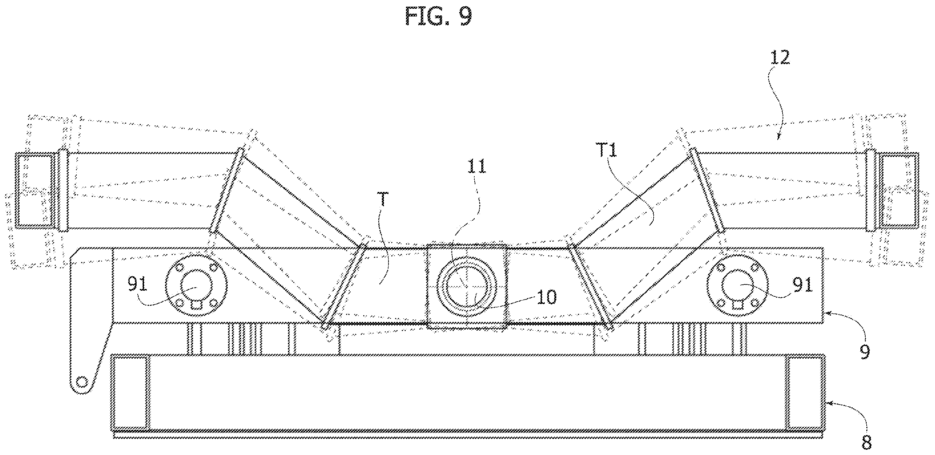

Once again with reference to Figures 8 and 9, the two end cross members T of the upper structure 9 carry two longitudinal pins 10, which have the function of supporting in an oscillating way, about a longitudinal central axis 11, an auxiliary supporting structure 12 (Figure 9) that is to support the array 1 of panels P directly. A rotation of the auxiliary supporting structure 12 about the longitudinal central axis 11 can be controlled by means of an actuator 13 (Figure 8) carried by the upper structure 9.

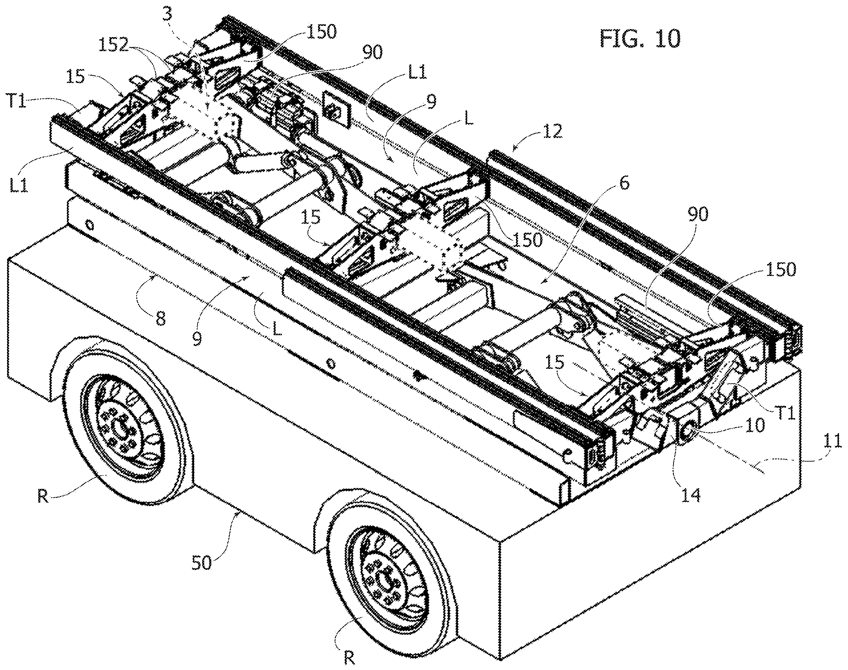

Figure 10 shows a perspective view of the carriage 5 (for convenience of illustration, the wheels R have been illustrated as conventional wheels), with the lifting device 6 illustrated in the lowered condition. Figure 10, shows, partially sectioned, the auxiliary supporting structure 12. This structure includes two longitudinal beams L1 having the ends connected by two cross members T1. Each cross member T1 (one of which is represented partially sectioned in Figure 10) has a central portion 14 arched downwards with respect to the ends of the cross member T1 in such a way as not to interfere with the area that is to receive the longitudinal beam 3 for supporting the array 1 of panels P.

The longitudinal beam 3 of the frame for supporting the array 1 of panels is to be received in the receptacles of a plurality of clamping devices 15 (in the example illustrated, three clamping devices 15 are provided) carried by cross members 150 having their ends connected to the two longitudinal beams L1.

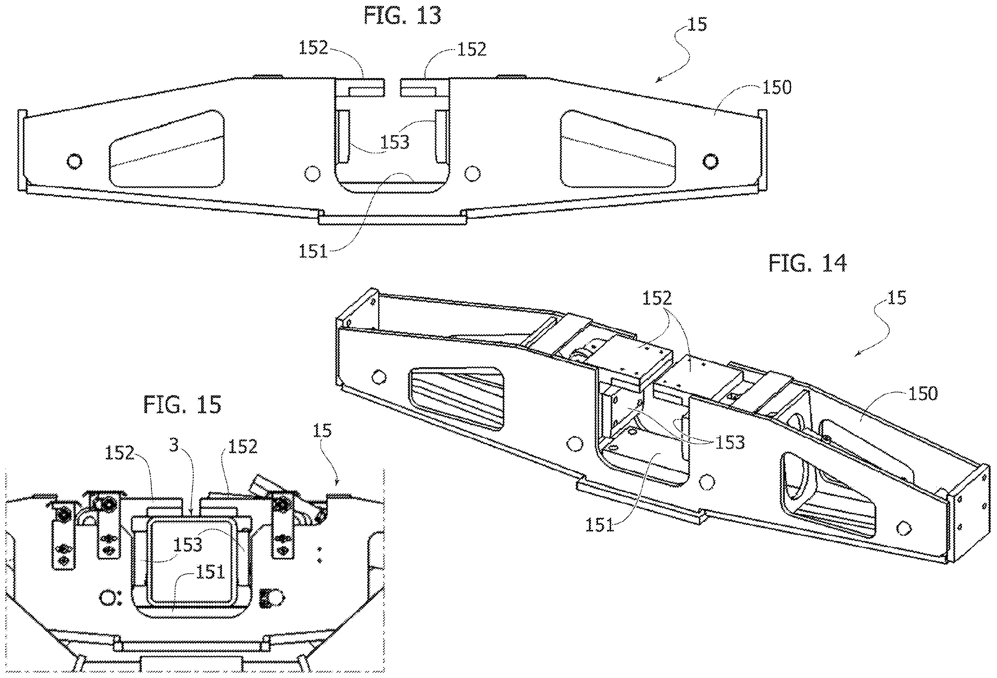

Figures 13-15 show a clamping device 15 at an enlarged scale. The structure of the cross member 150 defines a receptacle 151 for receiving the supporting beam 3 of the array 1 of panels P. The receptacle has a bottom wall and two side walls defined by two plates 153. Once the longitudinal beam 3 is received within the receptacle 151, it can be blocked in this position by means of two blocking elements 152 that can be displaced between an operative blocking position and an open released position (not illustrated). The movement of the two blocking elements 152 is controlled by means of respective actuators of any known type (not illustrated).

In the carriage according to the invention, the clamping devices 15 carried by the lifting device 6 are used both when an array 1 of panels P is being loaded onto the carriage 5 in the workstation for assembly of the array of panels and during laying of the array of panels in the installation field.

During loading of the array 1 of panels onto the carriage 5 (not illustrated in the annexed drawings) the carriage sets itself underneath the assembled array, and the lifting device is driven to raise the upper structure 9 and, along with it, the auxiliary supporting structure 12, maintaining the clamping devices 15 in the open condition. In this way, the longitudinal beam 3 of the supporting frame of the array of panels is received within the receptacles of the clamping devices 15, following upon raising of the upper structure 9 by the lifting device. Once the beam 3 for supporting the array of panels has been received within the seats 151 of the clamping devices, the latter are activated for blocking the beam 3 on the structure 12. The lifting device can thus be lowered, and the carriage can be driven to bring the array of panels onto the installation site.

Once the installation site is reached, the step already described above with reference to Figures 4 and 5 is activated in order to position the longitudinal beam 3 of the supporting frame of the array of panels on the receptacles provided at the top ends of the supporting posts 7 in the installation field.

The possibility of orienting the auxiliary supporting structure 12 about the longitudinal axis 11 enables, in this step, inclination, if so required, of the general plane of the array of panels laterally on one side or on the other, imparting thereon a rotation of roll (Figure 9) so as to take into account a possible incline of the terrain in the direction transverse to the longitudinal direction of the row of supporting posts 7.

Once the longitudinal beam 3 of the supporting frame of the array of panels has been received in the receptacles provided at the top ends of the supporting posts, the actuators 91 are activated (Figure 8) to impart on the entire array of panels the slight longitudinal movement that is necessary for coupling one end of the longitudinal beam 3 of the array to the corresponding end of the longitudinal beam of the supporting frame of the adjacent array of panels, previously laid in the installation field. Once the connection between the longitudinal beams has been made (for example, with the intervention of operators) the longitudinal beam 3 can then be blocked in the receptacles of the connection devices provided at the top ends of the supporting posts 7.

According to a preferred characteristic, the clamping devices 13 enable positioning of the blocking elements 152 also in an intermediate position between the open position and the gripping position, where the beam 3 is loosely blocked. In this configuration, the beam 3 is prevented from coming out of the receptacle 151 but has, however, a limited play within the receptacle that allows minor movements of adjustment during the operations of connection of the beam 3 to the connection devices provided at the top ends of the supporting posts 7.

Once the operations of connection are completed (for example, by carrying out manual operations), the clamping devices 15 can be completely opened, and the lifting device 6 can be lowered to release the carriage completely from the array 1 of panels laid in the installation field.

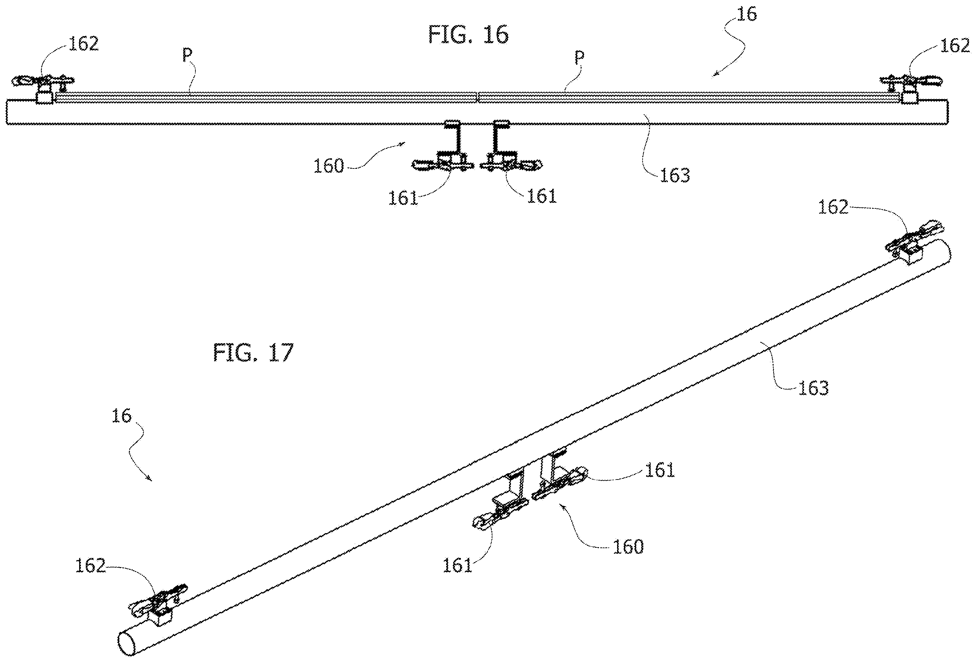

Figures 16 and 17 illustrate an accessory tool that is associated to the longitudinal beam 3 of the supporting frame of the array 1 of panels in order to support the last row of panels of the array during transport.

With reference to Figure 1, the two end panels of the array (the right-hand end in the figure) project in cantilever fashion with respect to the end of the longitudinal supporting beam 3. Consequently, unlike the other panels, they are not supported on opposite sides by two cross members 4. To support in a reliable way these panels during transport, mounted on the cross member 3 is the accessory member illustrated in Figures 16 and 17 and designated by the reference 16. This member is constituted by a transverse bar 163 (in the example with circular section) provided at the centre with a clamp 160 to be gripped on one end of the cross member 3. In the example illustrated, the clamp 160 comprises two clamping devices 161 of the manually driven toggle type, but of course any clamping device may be used for this purpose. The bar 16 functions as further support for the two end panels P of the array and is also provided at its ends with two further manually driven clamping devices 162, which are, for example, also of the toggle type, for blocking the panels P on the bar 16.

The configuration of the supporting frame of the array of solar converters could also be different from the one illustrated herein by way of example. Furthermore, in the present description and in the ensuing claims, the term "longitudinal beam" is to be understood in a general sense, as comprising also the case of one or more beam elements that do not extend throughout the length of the array of solar converters.

Likewise, the expression "substantially horizontal orientation" of the general plane of the array of solar converters is to be understood in a broad sense as defining an orientation in any case considerably different from a vertical orientation. As has been seen previously, the general plane of the array may be inclined, both longitudinally and laterally, with respect to the horizontal arrangement, according to the profile of the terrain in the area of installation. For the same reason, the movement of the lifting device may occur in a direction different from a vertical direction.

In the example illustrated here, the supporting posts 7 prearranged in the installation field are sufficiently tall to receive thereon the array 1 when the lifters 6A and 6B of the carriage 5 are lowered. In the case where the supporting posts 7 are too low to enable this operating mode, it is possible to envisage that the lifters 6A and 6B lay the array 1 on taller auxiliary posts, for example having a telescopic configuration, previously arranged in the installation field. Once the carriage has been released from the array 1, after the latter has been laid on the aforesaid auxiliary posts, these are shortened to lay the array 1 on the shorter main posts.

Naturally, without prejudice to the principle of the invention, the details of construction and the embodiments may vary widely with respect to what has been described and illustrated herein purely by way of example, without thereby departing from the scope of the present invention, as defined in the claims.

## Claims

1. A method for outdoor installation of an array (1) of solar converters including a supporting frame (2) and a plurality of solar converters (P) mounted on the supporting frame (2),
wherein said supporting frame (2) is to be laid on a supporting structure comprising an aligned series of supporting posts (7) arranged in the installation field,
wherein a vehicle (5) is provided for transporting the array (1) of solar converters (P) and for laying said array (1) of solar converters (P) on said supporting structure (7),
wherein the vehicle (5) is provided with a lifting device (6) for displacing the array (1) of solar converters (P) between a raised position and a lowered position, maintaining a general plane of the array with a substantially horizontal orientation, until the array (1) of solar converters (P) is laid on said supporting structure (7),
said method being **characterized in that**:
- said supporting frame (2) of the array (1) of solar converters includes a longitudinal beam (3) that is to be laid on said aligned series of supporting posts (7),
said vehicle is a carriage (5) that comprises:
- a load-bearing structure (50) mounted on wheels (R); and
- a main upper structure (9) of the carriage (5), prearranged for receiving thereon the array (1) of solar converters,
- said lifting device (6) being set between said load-bearing structure (50) and said main upper structure (9) of the carriage, loaded on which is the array (1) of solar converters,
associated to the carriage (5) is an electronic control unit (E) for controlling the movement of the carriage (5) and for driving the lifting device (6), and
said electronic control unit (E) is configured for executing the following steps:
- bringing the carriage (5) up adjacent to a row of supporting posts (7) in the installation field;
- lifting the array (1) of solar converters (P) above said supporting posts (7);
- displacing the carriage (5) within a space comprised between two successive posts (7) of the row; and
- lowering the array (1) of solar converters (P) until the longitudinal beam (3) of the supporting frame (2) of the array (1) of solar converters (P) is laid on the supporting posts (7) of the row.

2. The method according to claim 1, **characterized in that** said lifting device (6) includes a first lifter (6A) and a second lifter (6B) arranged on the carriage (5) in positions spaced apart from one another in a longitudinal direction of the carriage (5); and
wherein said electronic control unit (E) is configured in such a way as to be able to control the first and second lifters (6A and 6B) if necessary in a differentiated way, in order to impart on the general plane of the array (1) of solar converters an orientation longitudinally inclined forwards or backwards.

3. The method according to claim 2, **characterized**
**in that** said first lifter (6A) and said second lifter (6B) are both set between said load-bearing structure (50) of the carriage (5) and said main upper structure (9),
**in that** associated to said main upper structure (9) is an auxiliary supporting structure (12) onto which the array (1) of solar converters (P) is loaded,
said auxiliary supporting structure (12) being mounted so that it can oscillate about a longitudinal central axis (11) on said main upper structure (9), and
**in that** an actuator (13) is provided for controlling rotation of the auxiliary supporting structure (12) about said longitudinal central axis (11) in such a way as to impart on the general plane of the array (1) of solar converters (P) a laterally inclined orientation.

4. The method according to claim 3, **characterized in that** the auxiliary supporting structure (12) carries a plurality of clamping devices (15) set longitudinally at a distance apart from one another, to receive and block the longitudinal beam (3) of the supporting frame (2) of the array (1) of solar converters (P).

5. The method according to claim 4, **characterized in that** each clamping device (15) comprises a receptacle (151) received in which is the longitudinal supporting beam (3) and blocking elements (152) that can be displaced between a closed blocking position and an open release position.

6. The method according to claim 5, **characterized in that** said blocking elements (152) have an intermediate operating position, where the longitudinal supporting beam (3) is prevented from coming out of the receptacle (151) of the clamping device (15) while maintaining a play within said receptacle (151).

7. The method according to claim 3, **characterized in that** the upper structure (9) includes a first portion (90) operatively connected to the lifting device (6) and a second portion (9), mounted on which is said auxiliary supporting structure (12) and which is mounted so that it has a limited longitudinal movement with respect to said first portion, it being possible for said movement to be driven by a corresponding actuator (91).

8. The method according to claim 1, **characterized in that**:
- said load-bearing structure (50) is mounted on wheels (R) that are orientable about vertical axes in such a way as to enable the carriage to move forwards or backwards in a direction parallel to a longitudinal direction of the carriage, to veer with respect to said longitudinal direction, and/or to translate in a direction orthogonal to said longitudinal direction; and
- the carriage comprises at least one first electric motor carried by the load-bearing structure for controlling traction of one or more of said wheels (R) and a further electric motor associated to each of said wheels for controlling the orientation of each wheel (R) about the respective vertical axis of oscillation.

9. The method according to claim 8, **characterized in that** associated to the electronic control unit (E) is a driving device (A) for controlling both said electric motors for the movement of the carriage (5) and electric actuators of the lifting device (6).

10. The method according to any one of the preceding claims, **characterized in that**, during transport on the carriage (5), associated to one end of the longitudinal beam (3) of the supporting frame (2) is an accessory tool (16) comprising a vice (160) that can be blocked on the beam (3) and carries a transverse bar (163) that supports a last row of solar converters (P) that project in cantilever fashion beyond said end of the beam (3).

11. A carriage for transport and outdoor installation of an array (1) of solar converters (P), comprising:
- a lifting device (6) for displacing vertically an array (1) of solar converters (P) loaded thereon between a position of maximum raising and a position of maximum lowering,
said carriage being **characterized in that** it comprises:
- a load-bearing structure (50) mounted on wheels (R); and
- a main upper structure (9) of the carriage (5), arranged for receiving thereon the array (1) of solar converters,
- said lifting device (6) being set between said load-bearing structure (50) and said main upper structure (9) of the carriage, on which the array (1) of solar converters is loaded; and
- an electronic control unit for controlling the movement of the carriage and of the lifting device (6),
wherein said lifting device includes a first lifter (6A) and a second lifter (6B) arranged on the carriage in positions spaced apart from one another in a longitudinal direction of the carriage,
said first and second lifters (6A and 6B) both being set between said base structure (8) secured to the load-bearing structure (50) of the carriage (5) and said main upper structure (9) that is to carry, directly or indirectly, the array (1) of solar converters,
in such a way that said first and second lifters (6A and 6B) can be driven in a differentiated way to impart on the general plane of the array (1) of solar converters (P) an orientation longitudinally inclined forwards or backwards.

12. The carriage according to claim 11, **characterized in that**:
- associated to said main upper structure (9) is an auxiliary supporting structure (12) loaded onto which is the array (1) of solar converters (P),
said auxiliary supporting structure (12) is mounted so that it can oscillate about a longitudinal central axis (11) on said main upper structure (9), and
said carriage (5) further comprises an actuator (13) for controlling rotation of the auxiliary supporting structure (12) about said longitudinal central axis (11) in such a way as to impart on the general plane of the array (1) of solar converters (P) a laterally inclined orientation.

13. The carriage according to claim 12, **characterized in that** the auxiliary supporting structure (12) carries a plurality of clamping devices (15), set longitudinally at a distance apart from one another, to receive and block the longitudinal beam (3) of the supporting frame (2) of the array (1) of solar converters (P).

14. The carriage according to claim 13, **characterized in that** each clamping device (15) comprises a receptacle (151), received in which is the longitudinal supporting beam (3), and blocking elements (152) that can be displaced between a closed blocking position and an open release position.

15. The carriage according to claim 14, **characterized in that** said blocking elements (152) have an intermediate operating position where the longitudinal supporting beam (3) is prevented from coming out of the receptacle (151) of the clamping device (15) while maintaining a certain play within said receptacle (151).

16. The carriage according to claim 12, **characterized in that** the upper structure (9) includes a first upper-structure portion (90) operatively connected to the lifting device (6) and a second portion (9), mounted on which is said auxiliary supporting structure (12) and which is mounted so that it has a limited longitudinal movement with respect to said first portion, it being possible for said movement to be driven by means of a corresponding actuator (91).

17. The carriage according to claim 11, **characterized in that**:
- said load-bearing structure (50) is mounted on wheels (R) that are orientable about vertical axes in such a way as to enable the carriage to move forwards or backwards in a direction parallel to a longitudinal direction of the carriage, to veer with respect to said longitudinal direction, and/or to translate in a direction orthogonal to said longitudinal direction,
- the carriage comprises at least one first electric motor carried by the load-bearing structure for controlling traction of one or more of said wheels (R) and a further electric motor associated to each of said wheels for controlling the orientation of each wheel (R) about the respective vertical axis of oscillation.

18. The carriage according to claim 17, **characterized in that** associated to the electronic control unit (E) is a driving device (A) for controlling said electric motors of the carriage (5) and electric actuators of the lifting device (6).

## Patentansprüche

1. Verfahren zur Außeninstallation einer Anordnung (1) von Solarwandlern, das einen Stützrahmen (2) und eine Vielzahl von Solarwandlern (P), die auf dem Stützrahmen (2) montiert ist, einschließt,
wobei der Stützrahmen (2) auf eine Stützstruktur zu legen ist, die eine ausgerichtete Abfolge von Stützpfosten (7) umfasst, die in dem Installationsfeld angeordnet ist,
wobei ein Fahrzeug (5) zum Transportieren der Anordnung (1) von Solarwandlern (P) und zum Legen der Anordnung (1) von Solarwandlern (P) auf die Stützstruktur (7) bereitgestellt ist,
wobei das Fahrzeug (5) mit einer Hebevorrichtung (6) bereitgestellt ist, um die Anordnung (1) von Solarwandlern (P) zwischen einer angehobenen Position und einer abgesenkten Position zu verlagern, wobei eine allgemeine Ebene der Anordnung mit einer im Wesentlichen horizontalen Orientierung beibehalten wird, bis die Anordnung (1) von Solarwandlern (P) auf die Stützstruktur (7) gelegt wird, das Verfahren **dadurch gekennzeichnet, dass**:
- der Stützrahmen (2) der Anordnung (1) von Solarwandlern einen Längsträger (3) einschließt, der auf die ausgerichtete Abfolge von Stützpfosten (7) zu legen ist, wobei das Fahrzeug ein Wagen (5) ist, der umfasst:
- eine lasttragende Struktur (50), die auf Rädern (R) montiert ist; und
- eine obere Hauptstruktur (9) des Wagens (5), die zum darauf Aufnehmen der Anordnung (1) von Solarwandlern vorangeordnet ist,
- wobei die Hebevorrichtung (6) zwischen der lasttragenden Struktur (50) und der oberen Hauptstruktur (9) des Wagens eingerichtet ist, auf der die Anordnung (1) von Solarwandlern geladen ist,
wobei dem Wagen (5) eine elektronische Steuereinheit (E) zum Steuern der Bewegung des Wagens (5) und zum Antreiben der Hebevorrichtung (6) zugeordnet ist und
die elektronische Steuereinheit (E) zum Ausführen der folgenden Schritte konfiguriert ist:
- Bringen des Wagens (5) bis angrenzend an eine Reihe von Stützpfosten (7) in dem Installationsfeld;
- Anheben der Anordnung (1) von Solarwandlern (P) über die Stützpfosten (7);
- Verlagern des Wagens (5) innerhalb eines Raum, der zwischen zwei aufeinanderfolgenden Pfosten (7) der Reihe umfasst ist; und
- Absenken der Anordnung (1) von Solarwandlern (P), bis der Längsträger (3) des Stützrahmens (2) der Anordnung (1) von Solarwandlern (P) auf den Stützpfosten (7) der Reihe liegt.

2. Verfahren nach Anspruch 1, **dadurch gekennzeichnet, dass** die Hebevorrichtung (6) einen ersten Heber (6A) und einen zweiten Heber (6B) einschließt, die auf dem Wagen (5) in Positionen angeordnet sind, die in einer Längsrichtung des Wagens (5) voneinander beabstandet sind; und
wobei die elektronische Steuereinheit (E) dazu konfiguriert ist, in der Lage zu sein, den ersten und den zweiten Heber (6A und 6B) gegebenenfalls auf unterschiedliche Weise zu steuern, um der allgemeinen Ebene der Anordnung (1) von Solarwandlern eine längs nach vorne oder hinten geneigte Orientierung zu verleihen.

3. Verfahren nach Anspruch 2, **dadurch gekennzeichnet,**
**dass** der erste Heber (6A) und der zweite Heber (6B) beide zwischen der lasttragenden Struktur (50) des Wagens (5) und der oberen Hauptstruktur (9) eingerichtet sind,
**dass** der oberen Hauptstruktur (9) eine Hilfsstützstruktur (12) zugeordnet ist, auf die die Anordnung (1) von Solarwandlern (P) geladen wird,
wobei die Hilfsstützstruktur (12) so montiert ist, dass sie um eine zentrale Längsachse (11) auf der oberen Hauptstruktur (9) oszillieren kann, und
**dass** ein Aktor (13) zum Steuern einer Drehung der Hilfsstützstruktur (12) um die zentrale Längsachse (11) derart bereitgestellt ist, dass der allgemeinen Ebene der Anordnung (1) von Solarwandlern (P) eine seitlich geneigte Orientierung verliehen wird.

4. Verfahren nach Anspruch 3, **dadurch gekennzeichnet, dass** die Hilfsstützstruktur (12) eine Vielzahl von Klemmvorrichtungen (15) trägt die längs in einem Abstand voneinander eingerichtet sind, um den Längsträger (3) des Stützrahmens (2) der Anordnung (1) von Solarwandlern (P) aufzunehmen und zu blockieren.

5. Verfahren nach Anspruch 4, **dadurch gekennzeichnet, dass** jede Klemmvorrichtung (15) eine Aufnahme (151) in der sich der Längsstützträger (3) befindet, und Blockierelemente (152), die zwischen einer geschlossenen Blockierposition und einer offenen Freigabeposition verlagert werden können, umfasst.

6. Verfahren nach Anspruch 5, **dadurch gekennzeichnet, dass** die Blockierelemente (152) eine mittlere Betriebsposition aufweisen, wobei der Längsstützträger (3) daran gehindert wird, aus der Aufnahme (151) der Klemmvorrichtung (15) herauszukommen, während ein Spiel innerhalb der Aufnahme (151) beibehalten wird.

7. Verfahren nach Anspruch 3, **dadurch gekennzeichnet, dass** die obere Struktur (9) einen ersten Abschnitt (90), der betrieblich mit der Hebevorrichtung (6) verbunden ist, und einen zweiten Abschnitt (9) einschließt, auf dem die Hilfsstützstruktur (12) montiert ist und der derart montiert ist, dass er eine begrenzte Längsbewegung in Bezug auf den ersten Abschnitt aufweist, wobei es dieser Bewegung möglich ist, durch einen entsprechenden Aktor (91) angetrieben zu werden.

8. Verfahren nach Anspruch 1, **dadurch gekennzeichnet, dass**:
- die lasttragende Struktur (50) auf Rädern (R) montiert ist, die um vertikale Achsen derart orientierbar sind, dem Wagen zu ermöglichen, sich in einer Richtung parallel zu einer Längsrichtung des Wagens vorwärts oder rückwärts zu bewegen, in Bezug auf die Längsrichtung auszuscheren und/oder in einer Richtung orthogonal zu der Längsrichtung zu translatieren; und
- der Wagen mindestens einen ersten, durch die lasttragende Struktur getragenen Elektromotor zum Steuern der Traktion eines oder mehrerer der Räder (R) und einen weiteren, jedem der Räder zugeordneten Elektromotor zum Steuern der Orientierung jedes Rads (R) um die jeweilige vertikale Oszillationsachse umfasst.

9. Verfahren nach Anspruch 8, **dadurch gekennzeichnet, dass** der elektronischen Steuereinheit (E) eine Antriebsvorrichtung (A) zum Steuern sowohl der Elektromotoren für die Bewegung des Wagens (5) als auch der elektrischen Aktoren der Hebevorrichtung (6) zugeordnet ist.

10. Verfahren nach einem der vorhergehenden Ansprüche, **dadurch gekennzeichnet, dass** während eines Transports auf dem Wagen (5) einem Ende des Längsträgers (3) des Stützrahmens (2) ein Zusatzwerkzeug (16) zugeordnet ist, das einen Schraubstock (160) umfasst, der auf dem Träger (3) blockiert werden kann und einen Querbalken (163) trägt, der eine letzte Reihe von Solarwandlern (P) trägt, die auf freitragende Weise über das Ende des Trägers (3) hinausragen.

11. Wagen zum Transport und zur Außeninstallation einer Anordnung (1) von Solarwandlern (P), umfassend:
- eine Hebevorrichtung (6) zum vertikalen Verlagern einer Anordnung (1) von darauf geladenen Solarwandlern (P) zwischen einer Position eines maximalen Anhebens und einer Position eines maximalen Absenkens,
wobei der Wagen **dadurch gekennzeichnet ist, dass** er umfasst:
- eine lasttragende Struktur (50), die auf Rädern (R) montiert ist; und
- eine obere Hauptstruktur (9) des Wagens (5), die zum darauf Aufnehmen der Anordnung (1) von Solarwandlern angeordnet ist,
- wobei die Hebevorrichtung (6) zwischen der lasttragenden Struktur (50) und der oberen Hauptstruktur (9) des Wagens eingerichtet ist, auf die die Anordnung (1) von Solarwandlern geladen wird; und
- eine elektronische Steuereinheit zum Steuern der Bewegung des Wagens und der Hebevorrichtung (6),
wobei die Hebevorrichtung einen ersten Heber (6A) und einen zweiten Heber (6B) einschließt, die auf dem Wagen in Positionen angeordnet sind, die in einer Längsrichtung des Wagens voneinander beabstandet sind,
wobei der erste und der zweite Heber (6A und 6B) beide zwischen der Basisstruktur (8), die an der lasttragenden Struktur (50) des Wagens (5) gesichert ist, und der oberen Hauptstruktur (9), die dazu vorgesehen ist, direkt oder indirekt die Anordnung (1) von Solarwandlern zu tragen, derart eingerichtet sind,
dass der erste und der zweite Heber (6A und 6B) auf unterschiedliche Weise angetrieben werden können, um der allgemeinen Ebene der Anordnung (1) von Solarwandlern (P) eine längs nach vorne oder hinten geneigte Orientierung zu verleihen.

12. Wagen nach Anspruch 11, **dadurch gekennzeichnet, dass**:
- der oberen Hauptstruktur (9) eine Hilfsstützstruktur (12) zugeordnet ist, auf die die Anordnung (1) von Solarwandlern (P) geladen wird,
wobei die Hilfsstützstruktur (12) derart montiert ist, dass sie um eine zentrale Längsachse (11) auf der oberen Hauptstruktur (9) oszillieren kann, und der Wagen (5) weiter einen Aktor (13) zum Steuern einer Drehung der Hilfsstützstruktur (12) um die zentrale Längsachse (11) derart umfasst, der allgemeinen Ebene der Anordnung (1) von Solarwandlern (P) eine seitlich geneigte Orientierung zu verleihen.

13. Wagen nach Anspruch 12, **dadurch gekennzeichnet, dass** die Hilfsstützstruktur (12) eine Vielzahl von Klemmvorrichtungen (15) trägt, die längs in einem Abstand voneinander eingerichtet sind, um den Längsträger (3) des Stützrahmens (2) der Anordnung (1) von Solarwandlern (P) aufzunehmen und zu blockieren.

14. Wagen nach Anspruch 13, **dadurch gekennzeichnet, dass** jede Klemmvorrichtung (15) eine Aufnahme (151), in der sich der Längsstützträger (3) befindet, und Blockierelemente (152), die zwischen einer geschlossenen Blockierposition und einer offenen Freigabeposition verlagert werden können, umfasst.

15. Wagen nach Anspruch 14, **dadurch gekennzeichnet, dass** die Blockierelemente (152) eine mittlere Betriebsposition aufweisen, wobei der Längsstützträger (3) daran gehindert wird, aus der Aufnahme (151) der Klemmvorrichtung (15) herauszukommen, wobei ein gewisses Spiel innerhalb der Aufnahme (151) beibehalten wird.

16. Wagen nach Anspruch 12, **dadurch gekennzeichnet, dass** die obere Struktur (9) einen ersten oberen Strukturabschnitt (90), der betrieblich mit der Hebevorrichtung (6) verbunden ist, und einen zweiten Abschnitt (9) einschließt, auf dem die zusätzliche Stützstruktur (12) montiert ist und der derart montiert ist, dass er eine begrenzte Längsbewegung in Bezug auf den ersten Abschnitt aufweist, wobei es für diese Bewegung möglich ist, mittels eines entsprechenden Aktors (91) angetrieben zu werden.

17. Wagen nach Anspruch 11, **dadurch gekennzeichnet, dass**:
- die lasttragende Struktur (50) auf Rädern (R) montiert ist, die um vertikale Achsen derart orientierbar sind, dem Wagen zu ermöglichen, sich in einer Richtung parallel zu einer Längsrichtung des Wagens vorwärts oder rückwärts zu bewegen, in Bezug auf die Längsrichtung auszuscheren und/oder in einer Richtung orthogonal zu der Längsrichtung zu translatieren,
- der Wagen mindestens einen ersten, durch die lasttragende Struktur getragenen Elektromotor zum Steuern der Traktion eines oder mehrerer der Räder (R) und einen weiteren, jedem der Räder zugeordneten Elektromotor zum Steuern der Orientierung jedes Rads (R) um die jeweilige vertikale Oszillationsachse umfasst.

18. Wagen nach Anspruch 17, **dadurch gekennzeichnet, dass** der elektronischen Steuereinheit (E) eine Antriebsvorrichtung (A) zum Steuern der Elektromotoren des Wagens (5) und elektrischer Aktoren der Hebevorrichtung (6) zugeordnet ist.

## Revendications

1. Procédé d'installation en extérieur d'un réseau (1) de convertisseurs solaires comprenant un cadre de support (2) et une pluralité de convertisseurs solaires (P) montés sur le cadre de support (2),
dans lequel ledit cadre de support (2) doit être posé sur une structure de support comprenant une série alignée de poteaux de support (7) agencés dans le terrain d'installation,
dans lequel un véhicule (5) est prévu pour transporter le réseau (1) de convertisseurs solaires (P) et pour poser ledit réseau (1) de convertisseurs solaires (P) sur ladite structure de support (7),
dans lequel le véhicule (5) est muni d'un dispositif de levage (6) pour déplacer le réseau (1) de convertisseurs solaires (P) entre une position surélevée et une position abaissée, en maintenant un plan général du réseau avec une orientation sensiblement horizontale, jusqu'à ce que le réseau (1) de convertisseurs solaires (P) soit posé sur ladite structure de support (7),
ledit procédé étant **caractérisé en ce que** :
- ledit cadre de support (2) du réseau (1) de convertisseurs solaires comprend une poutre longitudinale (3) qui doit être posée sur ladite série alignée de poteaux de support (7),
ledit véhicule est un chariot (5) qui comprend :
- une structure porteuse (50) montée sur des roues (R) ; et
- une structure supérieure principale (9) du chariot (5), pré-agencée pour recevoir dessus le réseau (1) de convertisseurs solaires,
- ledit dispositif de levage (6) étant placé entre ladite structure porteuse (50) et ladite structure supérieure principale (9) du chariot, sur lequel est chargé le réseau (1) de convertisseurs solaires ;
une unité de commande électronique (E) est associée au chariot (5) pour commander le mouvement du chariot (5) et pour entraîner le dispositif de levage (6), et
ladite unité de commande électronique (E) est configurée pour exécuter les étapes suivantes :
- de mise en place du chariot (5) de manière adjacente à une rangée de poteaux de support (7) dans le terrain d'installation ;
- de levage du réseau (1) de convertisseurs solaires (P) au-dessus desdits poteaux de support (7) ;
- de déplacement du chariot (5) dans un espace compris entre deux poteaux successifs (7) de la rangée ; et
- d'abaissement du réseau (1) de convertisseurs solaires (P) jusqu'à ce que la poutre longitudinale (3) du cadre de support (2) du réseau (1) de convertisseurs solaires (P) soit posée sur les poteaux de support (7) de la rangée.

2. Procédé selon la revendication 1, **caractérisé en ce que** ledit dispositif de levage (6) comprend un premier organe de levage (6A) et un second organe de levage (6B) agencés sur le chariot (5) dans des positions espacées l'une de l'autre dans une direction longitudinale du chariot (5) ; et
dans lequel ladite unité de commande électronique (E) est configurée de manière à pouvoir commander les premier et second organes de levage (6A et 6B) si nécessaire de manière différenciée, afin de conférer au plan général du réseau (1) de convertisseurs solaires une orientation longitudinalement inclinée vers l'avant ou vers l'arrière.

3. Procédé selon la revendication 2, **caractérisé**
**en ce que** ledit premier organe de levage (6A) et ledit second organe de levage (6B) sont tous deux placés entre ladite structure porteuse (50) du chariot (5) et ladite structure supérieure principale (9),
**en ce qu'**une structure de support auxiliaire (12) sur laquelle le réseau (1) de convertisseurs solaires (P) est chargé, est associée à ladite structure supérieure principale (9),
ladite structure de support auxiliaire (12) étant montée de sorte qu'elle puisse osciller autour d'un axe central longitudinal (11) sur ladite structure supérieure principale (9), et
**en ce qu'**un actionneur (13) est prévu pour commander la rotation de la structure de support auxiliaire (12) autour dudit axe central longitudinal (11) de manière à conférer au plan général du réseau (1) de convertisseurs solaires (P) une orientation inclinée latéralement.

4. Procédé selon la revendication 3, **caractérisé en ce que** la structure de support auxiliaire (12) porte une pluralité de dispositifs de serrage (15) placés longitudinalement à une distance les uns des autres, pour recevoir et bloquer la poutre longitudinale (3) du cadre de support (2) du réseau (1) de convertisseurs solaires (P).

5. Procédé selon la revendication 4, **caractérisé en ce que** chaque dispositif de serrage (15) comprend un réceptacle (151) dans lequel est reçue la poutre de support longitudinale (3) et des éléments de blocage (152) qui peuvent être déplacés entre une position de blocage fermée et une position de libération ouverte.

6. Procédé selon la revendication 5, **caractérisé en ce que** lesdits éléments de blocage (152) ont une position de fonctionnement intermédiaire, dans laquelle la poutre de support longitudinale (3) est empêchée de sortir du réceptacle (151) du dispositif de serrage (15) tout en maintenant un jeu dans ledit réceptacle (151).

7. Procédé selon la revendication 3, **caractérisé en ce que** la structure supérieure (9) comprend une première partie (90) reliée de manière fonctionnelle au dispositif de levage (6) et une seconde partie (9), sur laquelle est montée ladite structure de support auxiliaire (12) et qui est montée de sorte qu'elle ait un mouvement longitudinal limité par rapport à ladite première partie, ledit mouvement pouvant être entraîné par un actionneur correspondant (91).

8. Procédé selon la revendication 1, **caractérisé en ce que** :
- ladite structure porteuse (50) est montée sur des roues (R) qui peuvent être orientées autour d'axes verticaux de manière à permettre au chariot de se déplacer vers l'avant ou vers l'arrière dans une direction parallèle à une direction longitudinale du chariot, de dévier par rapport à ladite direction longitudinale et/ou de se déplacer en translation dans une direction orthogonale à ladite direction longitudinale ; et
- le chariot comprend au moins un premier moteur électrique porté par la structure porteuse pour commander la traction d'une ou de plusieurs desdites roues (R) et un moteur électrique supplémentaire associé à chacune desdites roues pour commander l'orientation de chaque roue (R) autour de l'axe d'oscillation vertical respectif.

9. Procédé selon la revendication 8, **caractérisé en ce qu'**un dispositif d'entraînement (A) est associé à l'unité de commande électronique (E) pour commander à la fois lesdits moteurs électriques pour le mouvement du chariot (5) et lesdits actionneurs électriques du dispositif de levage (6).

10. Procédé selon l'une quelconque des revendications précédentes, **caractérisé en ce que**, pendant le transport sur le chariot (5), un outil accessoire (16) est associé à une extrémité de la poutre longitudinale (3) du cadre de support (2) et comprend un étau (160) qui peut être bloqué sur la poutre (3) et porte une barre transversale (163) qui supporte une dernière rangée de convertisseurs solaires (P) qui dépassent en porte-à-faux ladite extrémité de la poutre (3).

11. Chariot pour le transport et l'installation en extérieur d'un réseau (1) de convertisseurs solaires (P), comprenant :
- un dispositif de levage (6) pour déplacer verticalement un réseau (1) de convertisseurs solaires (P) chargés dessus entre une position d'élévation maximale et une position d'abaissement maximale,
ledit chariot étant **caractérisé en ce qu'**il comprend :
- une structure porteuse (50) montée sur des roues (R) ; et
- une structure supérieure principale (9) du chariot (5), agencée pour recevoir dessus le réseau (1) de convertisseurs solaires,
- ledit dispositif de levage (6) étant placé entre ladite structure porteuse (50) et ladite structure supérieure principale (9) du chariot, sur lequel est chargé le réseau (1) de convertisseurs solaires ; et
- une unité de commande électronique pour commander le mouvement du chariot et du dispositif de levage (6).
dans lequel ledit dispositif de levage comprend un premier organe de levage (6A) et un second organe de levage (6B) agencés sur le chariot dans des positions espacées l'une de l'autre dans une direction longitudinale du chariot,
lesdits premier et second organes de levage (6A et 6B) sont tous deux placés entre ladite structure de base (8) fixée à la structure porteuse (50) du chariot (5) et la structure supérieure principale (9) qui est destinée à porter, directement ou indirectement, le réseau (1) de convertisseurs solaires.
de sorte que lesdits premier et second organes de levage (6A et 6B) puissent être entraînés de manière différenciée pour conférer au plan général du réseau (1) de convertisseurs solaires (P) une orientation longitudinalement inclinée vers l'avant ou vers l'arrière.

12. Chariot selon la revendication 11, **caractérisé en ce que** :
- une structure de support auxiliaire (12), sur laquelle est chargé le réseau (1) de convertisseurs solaires (P), est associée à ladite structure supérieure principale (9),
ladite structure de support auxiliaire (12) est montée de sorte qu'elle puisse osciller autour d'un axe central longitudinal (11) sur ladite structure supérieure principale (9), et
ledit chariot (5) comprend en outre un actionneur (13) pour commander la rotation de la structure de support auxiliaire (12) autour dudit axe central longitudinal (11) de manière à conférer au plan général du réseau (1) de convertisseurs solaires (P) une orientation latéralement inclinée.

13. Chariot selon la revendication 12, **caractérisé en ce que** la structure de support auxiliaire (12) porte une pluralité de dispositifs de serrage (15), placés longitudinalement à une distance les uns des autres, pour recevoir et bloquer la poutre longitudinale (3) du cadre de support (2) du réseau (1) de convertisseurs solaires (P).

14. Chariot selon la revendication 13, **caractérisé en ce que** chaque dispositif de serrage (15) comprend un réceptacle (151), dans lequel est reçue la poutre de support longitudinale (3), et des éléments de blocage (152) qui peuvent être déplacés entre une position de blocage fermée et une position de libération ouverte.

15. Chariot selon la revendication 14, **caractérisé en ce que** lesdits éléments de blocage (152) ont une position de fonctionnement intermédiaire dans laquelle la poutre de support longitudinale (3) est empêchée de sortir du réceptacle (151) du dispositif de serrage (15) tout en maintenant un certain jeu dans ledit réceptacle (151).

16. Chariot selon la revendication 12, **caractérisé en ce que** la structure supérieure (9) comprend une première partie de structure supérieure (90) reliée de manière fonctionnelle au dispositif de levage (6) et une seconde partie (9) sur laquelle est montée ladite structure de support auxiliaire (12) et qui est montée de sorte qu'elle ait un mouvement longitudinal limité par rapport à ladite première partie, ledit mouvement pouvant être entraîné par un actionneur correspondant (91).

17. Chariot selon la revendication 11, **caractérisé en ce que** :
- ladite structure porteuse (50) est montée sur des roues (R) qui peuvent être orientées autour d'axes verticaux de manière à permettre au chariot de se déplacer vers l'avant ou vers l'arrière dans une direction parallèle à une direction longitudinale du chariot, de dévier par rapport à ladite direction longitudinale et/ou de se déplacer en translation dans une direction orthogonale à ladite direction longitudinale.
- le chariot comprend au moins un premier moteur électrique porté par la structure porteuse pour commander la traction d'une ou de plusieurs desdites roues (R), et un moteur électrique supplémentaire associé à chacune desdites roues pour commander l'orientation de chaque roue (R) autour de l'axe d'oscillation vertical respectif.

18. Chariot selon la revendication 17, **caractérisé en ce qu'**un dispositif d'entraînement (A) est associé à l'unité de commande électronique (E) pour commander lesdits moteurs électriques du chariot (5) et lesdits actionneurs électriques du dispositif de levage (6).
